# EUROPEAN PATENT APPLICATION

(11) **EP 3 450 169 A1**
(43) Date of publication of application: **06.03.2019**
(21) Application number: 17208301.6
(22) Date of filing: 19.12.2017
(51) Int. Cl.: B33Y 50/02, B33Y 40/00, B29C 64/35, B29C 64/393

(54) **3D PRINTER WITH PRINT HEAD MAINTAINING FUNCTION AND MOVING ROUTE CONTROLLING METHOD THEREOF**

(30) Priority: 31.08.2017 CN 201710772230
(71) Applicant: XYZprinting, Inc., New Taipei City 22201 (TW); Kinpo Electronics, Inc., New Taipei City 22201 (TW)
(72) Inventor: LIEN, Ting-Hsiang, 22201 Shenkeng Dist., New Taipei City (TW); HSIEH, Shih-Sen, 22201 Shenkeng Dist., New Taipei City (TW)
(74) Representative: 2K Patentanwälte Blasberg Kewitz & Reichel

(57) **Abstract**

A method of a 3D printer having a print platform (11), a print head (12) including a 2D nozzle (122) and a 3D nozzle (121), a cleaning element (2) for the 3D nozzle (121), and a maintenance unit (21) for the 2D nozzle (122) is disclosed and including: controlling the print head (12) to perform printing under a working status; calculating, under a non-working status, a cleaning route destination (100) according to current position of the print head (12), position of the cleaning element (2), and a location offset between the 2D nozzle (122) and the 3D nozzle (121); controlling the print head (12) to move to the cleaning route destination (100); and, controlling the print head (12) to perform a compensation movement from the cleaning route destination (100) to the maintenance unit (21) according to the location offset for utilizing the maintenance unit (21) to maintain the 2D nozzle (122).

## Description

### BACKGROUND OF THE INVENTION

### Field of the Invention

The present disclosure related to 3D printer, especially to a 3D printer with print head maintaining function and moving route controlling method for the same.

### Description of Related Art

Due to the maturity of 3D printing, and the size down as well as cost down of 3D printer, the 3D printer become popular these years. Some manufactures also propose 3D printer capable of printing 3D model with full color to render the 3D printer more acceptable by user.

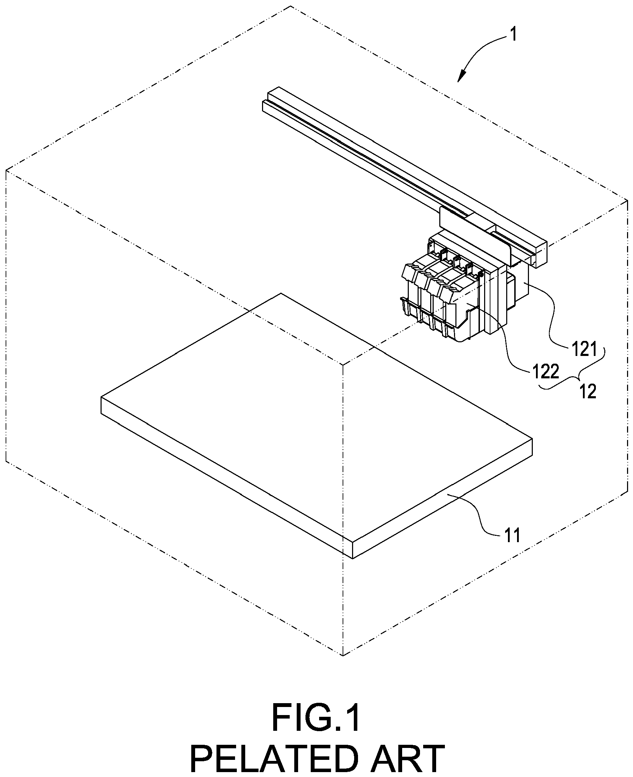

Fig. 1 shows the schematic view of the 3D printer in related art. As shown in Fig. 1, the related-art 3D printer 1 mainly comprises a print platform 11 and print head 12. The print head 12 comprises a 3D nozzle 121 for spraying forming material to construct the printed object and a 2D nozzle 122 for spraying ink to color the printed object. Therefore, the 3D printer 1 may construct the full-color 3D model by stacking a plurality of colored printed objects.

The 3D nozzle 121 heats the filament therein and extrudes the half-molten forming material from the outlet (not shown) thereof. The outlet of the 3D nozzle 121 has material residue problem after a long printing time and the appearance of the printed object is influenced. Moreover, the 3D printer 1 adopts the ink nozzle of the current market available 2D nozzle as the above mentioned 2D nozzle 122. The 2D nozzle 122 may have jam problem due to dried ink if the 2D nozzle 122 idles for a long time or has accumulated ink.

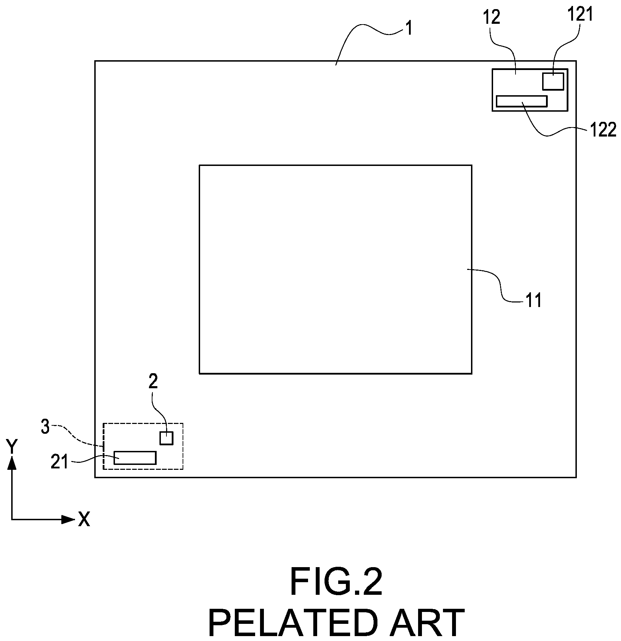

Fig. 2 shows the top view of the 3D printer of related art. The related-art 3D printer 1 is equipped with additional cleaning element 2 to remove material residue on outlet of the 3D nozzle 121. More particularly, the cleaning element 2 may be cleaning knife with sharp end upward. The entire print head 12 is moved while the 3D nozzle 121 passes through and touches the top portion of the cleaning element 2 (for example, the 3D nozzle 121 has back and forth movement atop the cleaning element 2) such that the 3D printer 1 can perform cleaning for the 3D nozzle 121 and remove material residue on outlet of the 3D nozzle 121. Moreover, to prevent the jam problem of the 2D nozzle 122, the related-art 3D printer 1 is equipped with additional maintenance unit 21 to perform maintenance for the 2D nozzle 122.

The related-art 3D printer 1 has a print head 12 comprising a 3D nozzle 121 and a 2D nozzle 122. The 2D nozzle 122 may collide with the cleaning element 2 due to ill-programmed cleaning route when the 3D printer 1 controls the 3D nozzle 121 to move to the cleaning element 2, or controls the 2D nozzle 122 to the maintenance unit 21. As a result, the outlet (not shown) on surface of the 2D nozzle 122 may be damaged.

### SUMMARY OF THE INVENTION

The present disclosure provided a 3D printer with print head maintaining function and moving route controlling method for the same, where the 2D nozzle can detour the cleaning element and can be prevented from damage or interference by the cleaning element.

According to an exemplary embodiment, the 3D printer includes a print platform configured to support a printed object; a print head comprising a 2D nozzle and a 3D nozzle, the 2D nozzle having a location offset with respect to the 3D nozzle; a cleaning element configured to clean the 3D nozzle; and a maintenance unit configured to maintain the 2D nozzle; wherein the 3D printer is configured to control the print head to move on the print platform and to print the printed object when the 3D printer enters a working status; wherein the 3D printer is configured to calculate a cleaning route destination based on to a current location of the print head, a location of the cleaning element, and the location offset when the 3D printer enters a non-working status, the 3D printer is configured to control the print head to move to the cleaning route destination and move the print head by a compensation movement from the cleaning route destination such that the 2D nozzle is moved into the maintenance unit for maintenance there.

In comparison with the related-art 3D printer, the 3D printer of the present disclosure first control the 2D nozzle to move to a cleaning route destination along a cleaning route through which the 2D nozzle is impossible to collide with the cleaning element. The 3D printer then controls the print head to have compensation movement from the cleaning route destination such that the 2D nozzle enters the maintenance unit, whereby the 2D nozzle can be prevented from damage caused by collision with the cleaning element during the movement of the print head.

### BRIEF DESCRIPTION OF DRAWING

One or more embodiments of the present disclosure are illustrated by way of example and not limitation in the figures of the accompanying drawings, in which like references indicate similar elements. These drawings are not necessarily drawn to scale.
Fig. 1 shows the schematic view of the 3D printer in related art.
Fig. 2 shows the top view of the 3D printer of related art.
Fig. 3 is a top view of the 3D printer according to the first embodiment of the present disclosure.
Fig. 4A shows a front view of the print head according to the first embodiment of the present disclosure.
Fig. 4B shows a side view of the print head according to the first embodiment of the present disclosure.
Fig. 4C shows a top view of the print head according to the first embodiment of the present disclosure.
Fig. 5A is a first flowchart according to a first embodiment of the present disclosure.
Fig. 5B is a second flowchart according to the first embodiment of the present disclosure.
Fig. 6A shows a first movement according to the first embodiment of the present disclosure.
Fig. 6B shows a second movement according to the first embodiment of the present disclosure.
Fig. 6C shows a third movement according to the first embodiment of the present disclosure.
Fig. 7 shows the top view of the print head according to the second embodiment of the present disclosure.
Fig. 8 shows the top view of the print head according to the third embodiment of the present disclosure.
Fig. 9 shows the schematic view of the 3D printer according to the third embodiment of the present disclosure

### DETAILED DESCRIPTION OF THE INVENTION

As mentioned above, the present disclosure is mainly applied to a 3D printer with single print head comprising a 2D nozzle and a 3D nozzle. The present disclosure can prevent the collision of the 2D nozzle with the cleaning element used to clean the 3D nozzle during the movement of the print head. To this end, the 3D printer of the present disclosure needs to calculate or record a plurality of relative parameters for the 3D printer.

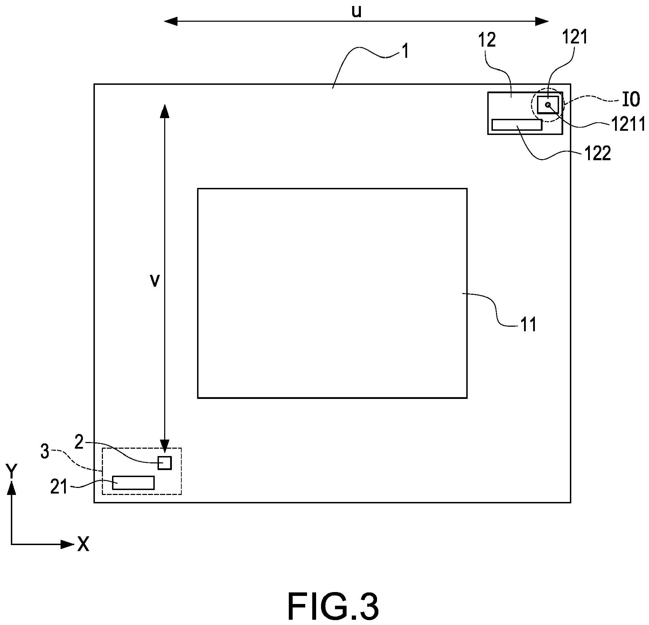

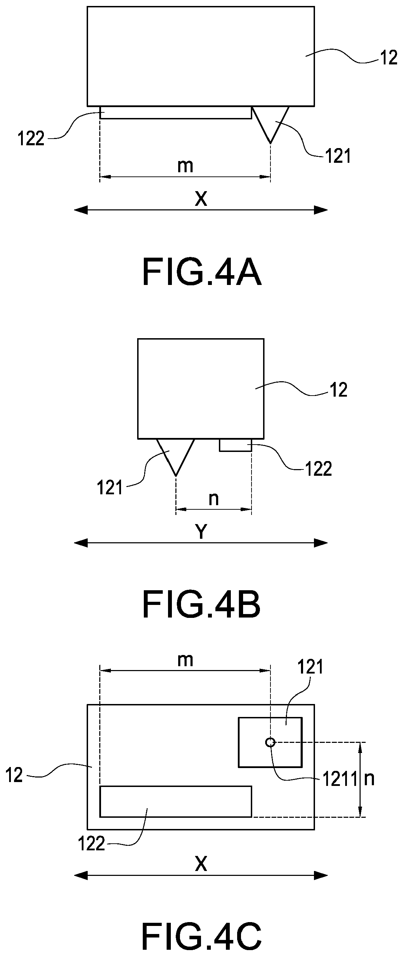

Refer now to Figs. 3, 4A, 4B, and 4C, where Fig. 3 is a top view of the 3D printer according to the first embodiment of the present disclosure, and Figs. 4A to 4C respectively shows a front view, a side view and a top view of the print head according to the first embodiment of the present disclosure.

As shown in Fig. 3, the present disclosure discloses a 3D printer 1 with print head maintaining function (hereinafter the 3D printer 1) and the 3D printer 1 comprises at least a print platform 11, a print head 12, a cleaning element 2 and a maintenance unit 21.

In the present disclosure, the print head 12 comprises a 3D nozzle 121 to extrude forming material on the print platform 11 to stack printed object on the print platform 11 and a 2D nozzle 122 to spray ink to color the printed object. As shown in Figs. 4A to 4C, the 2D nozzle 122 and the 3D nozzle 121 are different elements and arranged within the casing of the same print head 12 such that the 2D nozzle 122 and the 3D nozzle 121 have a set of location offsets therebetween (such as the offset m and the offset n shown in Fig. 4C).

In this embodiment, the cleaning element 2 is an element for cleaning the 3D nozzle 121 (such as a cleaning knife to remove material residue on outlet of the 3D nozzle 121). More particularly, the cleaning element 2 is arranged within the 3D printer 1 (for example, the cleaning element 2 may be arranged within the print platform 11, outside the print platform 11 or on the print platform 11) and has a predetermined height. The top end of the cleaning element 2 may touch the surface of the 3D nozzle 121 or the surface of the 2D nozzle 122 when the print head 12 moves and passes via the location of the cleaning element 2. The cleaning element 2 performs cleaning operation for the surface of the 3D nozzle 121 when the cleaning element 2 touches the 3D nozzle 121. However, the cleaning element 2 may damage a plurality of ink outlets (not shown) on the surface of the 2D nozzle 122 when the cleaning element 2 touches the 2D nozzle 122.

The maintenance unit 21 performs maintenance for the 2D nozzle 122. More particularly, the 2D nozzle 122 may have jam problem due to dried ink if the 2D nozzle 122 idles for a long time or has accumulated ink. The maintenance unit 21 performs maintenance and cleaning for the 2D nozzle 122 to keep the 2D nozzle 122 wet. In this embodiment, the 3D printer 1 controls the print head 12 to move and moves the 2D nozzle 122 to enter the maintenance unit 21 such that the maintenance unit 21 can perform maintenance for the 2D nozzle 122, when the 3D printer 1 determines that the 2D nozzle 122 needs maintenance.

It should be noted that the 3D printer 1 may control the print head 12 to enter the maintenance unit 21 based on a route programmed with respect to the coordinate of the cleaning element 2 such that the print head 12 detours the location of the cleaning element 2 during movement. Therefore, the 2D nozzle 122 can be prevented from damage caused by collision with the cleaning element 2. In one embodiment, the cleaning element 2 and the maintenance unit 21 can be integrated into a cleaning module 3 such that the cleaning element 2 and the maintenance unit 21 can be fast arranged on the 3D printer 1 during manufacture.

The 3D printer 1 defines a printing home location I0 through a processor (not shown), where the printing home location I0 is a virtual positioning location and defined within the 3D printer 1. The 3D printer 1 may perform initial positioning for the print head 12 through the printing home location 10. Generally, to control the cleaning element 2 to clean the 3D nozzle 121, the 3D printer 1 controls the print head 12 to move back to the printing home location 10, controls the print head 12 to move toward x-axis by a distance u from the printing home location 10, and then controls the print head 12 to move toward y-axis by a distance v. Therefore, the 3D nozzle 121 can be moved to the cleaning element 2, namely the cleaning route for the 3D nozzle 121 is a movement u along x-axis plus a movement v along y-axis.

However, in the present disclosure, the print head 12 comprises the 3D nozzle 121 and the 2D nozzle 122. The 2D nozzle 122 has risk of colliding with the cleaning element 2 during movement thereof if the print head 12 is moved along the above-mentioned cleaning route. Moreover, the 3D printer 1 needs to control the print head 12 to move back to the printing home location I0 and then move to the maintenance unit 21 from the printing home location I0 if the 2D nozzle 122 is to be maintained by the maintenance unit 21. Similarly, the 2D nozzle 122 may pass through the cleaning element 2 and have the risk of colliding with the cleaning element 2 during movement of print head 12 toward the maintenance unit 21.

In one embodiment, the cleaning element 2 and the maintenance unit 21 may be integrated into a cleaning module 3, and the relative location and the relative distance between the cleaning element 2 and the maintenance unit 21 on the cleaning module 3 are equal to the relative location and the relative distance between the 3D nozzle 121 and the 2D nozzle 122 on the print head 12. Therefore, the 2D nozzle 122 may enter the maintenance unit 21 for receiving maintenance therein when the 3D nozzle 121 is moved to the cleaning element 2 for receiving cleaning therein, thus enhance the cleaning and maintaining efficiency of the 3D printer 1.

In this embodiment, the 3D printer 1 will control the print head 12 to move atop the print platform 11 to print and color the printed object when the 3D printer 1 enter working status. If the cleaning element 2 is not arranged on the print platform 11, the 2D nozzle 122 will never collide with the cleaning head 2, no matter how the print head 12 moves in working status.

The 3D printer 1 leaves the working status and enters a non-working status (namely, enters an interrupt status or a maintenance status) when a preset condition is reached. More particularly, the 3D printer 1 automatically enters the non-working status when the 3D printer 1 determines that the 3D nozzle 121 has material residue or the 2D nozzle 122 has accumulated ink, whereby the cleaning element 2 performs cleaning for the 3D nozzle 121 and/or the maintenance unit 21 performs maintenance for the 2D nozzle 122. For example, the 3D printer 1 may determine that the 3D nozzle 121 has residue material when the printing time exceeds a threshold time, the extrusion amount of the forming material exceeds a threshold amount or the printing layers of the printed object exceeds a threshold layer number. Moreover, the 3D printer 1 may determine that the 2D nozzle 122 has accumulated ink when 2D nozzle 122 does not spray ink for a predetermined time. However, the above description is only exemplary and is not limitation for the present disclosure.

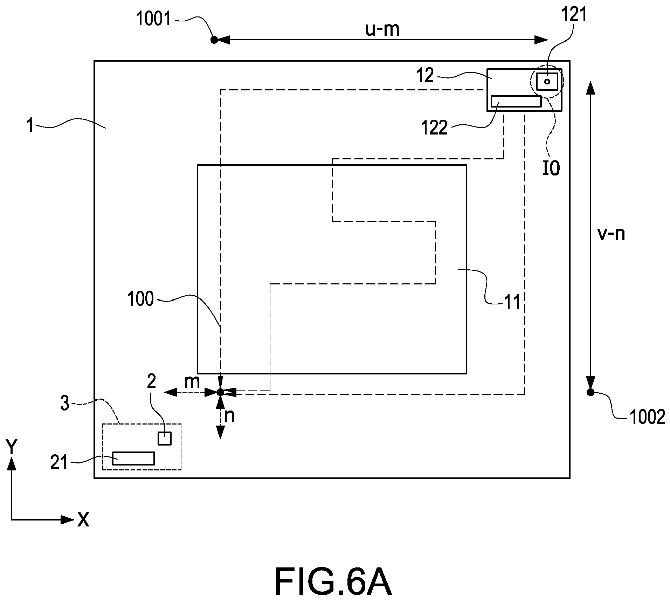

In this embodiment, the 3D printer 1 calculates a cleaning route destination (such as the cleaning route destination 100 shown in Fig. 6A) based on a current position of the print head 12 (the first coordinate), the arrangement location of the cleaning element 2 (the second coordinate) and the location offset between the 2D nozzle 122 and the 3D nozzle 121. Afterward, the 3D printer 1 controls the print head 12 to move to the cleaning route destination.

The 3D printer 1 may further perform compensation movement for the print head 12 from the cleaning route destination based on the location offset such that the 2D nozzle 122 enters the maintenance unit 21. The 3D nozzle 121 may enter the clearing range of the cleaning element 2 at the same time if the relative location and the relative distance between the cleaning element 2 and the maintenance unit 21 on the cleaning module 3 are equal to the relative location and the relative distance between the 3D nozzle 121 and the 2D nozzle 122 on the print head 12. Therefore, the maintenance unit 21 performs maintenance for the 2D nozzle 122 while the cleaning element 2 performing cleaning for the 3D nozzle 121.

More particularly, the 3D printer 1 mainly performs the compensation movement based on the relative location and the relative distance between the 3D nozzle 121 and the 2D nozzle 122 on the print head 12 and the compensation movement may have various paths. Therefore, the 2D nozzle 122 can be moved to the maintenance unit 21 from the cleaning route destination (detailed later) without colliding with the cleaning element 2, which will be detailed later.

As shown in Figs. 4A and 4B, the location offset of the 2D nozzle 122 includes at least the transversal offset m with respect to the platform 11 along x-axis and the longitudinal offset n with respect to the platform 11 along y-axis.

As shown in Fig. 4C, in the present disclosure, the 2D nozzle 122 may be nozzle capable of spraying inks of various colors such as cyan, magenta, yellow and black, and have a plurality of ink outlets (not shown) corresponding to inks of various colors. The 3D nozzle 121 has extrusion outlet 1211 and extrudes the half-molten forming material on the print platform 11 through the extrusion outlet 1211 after the forming material therein is heated.

In this embodiment, the location offset mainly refers to the distance between the farthest ink outlet (which is farthest to the 3D nozzle 121 with respect to other ink outlets of the 2D nozzle 122) of the 2D nozzle 122 and the extrusion outlet 1211 of the 3D nozzle 121. More particularly, the transversal offset m refers to as the distance between the farthest ink outlet and the extrusion outlet 1211 along x-axis and the longitudinal offset n refers to as the distance between the farthest ink outlet and the extrusion outlet 1211 along y-axis.

In another embodiment, to prevent the 2D nozzle 122 from damage, the location offset may also refer to the distance between the farthest end (based on the distance to the 3D nozzle 121) of the2D nozzle 122 and the extrusion outlet 1211 of the 3D nozzle 121. However, the above description is only exemplary and is not limitation for the present disclosure.

In the present disclosure, the 3D printer 1 may first control the print head 12 to move to the printing home location I0 to perform initial positioning for the print head 12 when the 3D printer 1 enters the working status. After the initial positioning, the print head 12 may use the same coordinate system with the printing home location I0 and the cleaning element 2. Therefore, the 3D printer 1 can easily calculate the current location of the print head 12 during movement of the print head 12. In the embodiment shown in Fig. 3, the coordinate of the printing home location I0 can be deemed as (0, 0) while the coordinate of the cleaning element 2 can be deemed as (u, v).

In an embodiment, the 3D printer 1 determines that the initial positioning is finished when the extrusion outlet 1211 of the 3D nozzle 121 reaches the printing home location I0, namely, the extrusion outlet 1211 of the 3D nozzle 121 is deemed as the positioning location for the whole print head 12. However, the above description is only exemplary and is not limitation for the present disclosure.

If the print head 12 uses the same coordinate system with the printing home location I0 and the cleaning element 2, the 3D printer 1 calculates the cleaning route destination based on the current position of the print head 12, the location of the printing home location I0, the arrangement location of the cleaning element 2 and the location offset between the 2D nozzle 122 and the 3D nozzle 121 when the 3D printer 1 enter non-working status.

More particularly, as shown in Figs. 3, 4A-4C, the 3D printer 1 already knows the coordinate (such as (0, 0)) of the printing home location I0, the coordinate (such as (u, v)) of the cleaning element 2, and the location offsets of the 2D nozzle 122 with respect to the 3D nozzle 121 (such as the transversal offset m and the longitudinal offset n) when the 3D printer 1 enters the non-working status. Therefore, the 3D printer 1 mainly subtracts the transversal offset from the distance between the printing home location I0 and the cleaning element 2 along x-axis (namely, u-m) to obtain the x-axis destination, and subtracts the longitudinal offset from the distance between the printing home location I0 and the cleaning element 2 along y-axis (namely, v-n) to obtain the y-axis destination. Therefore, the 3D printer 1 generates the cleaning route destination based on the x-axis destination and the y-axis destination, namely, the coordinate of the cleaning route destination is (u-m, v-n).

It should be noted that the 3D printer 1 may directly control the print head 12 to move to the cleaning route destination through arbitrary trace because the 3D printer 1 already knows the cleaning route destination. The 3D printer 1 does not need to control the print head 12 to move back to the printing home location I0 and then move to the cleaning route destination from the printing home location I0. Therefore, the cleaning time for the print head 12 can be saved.

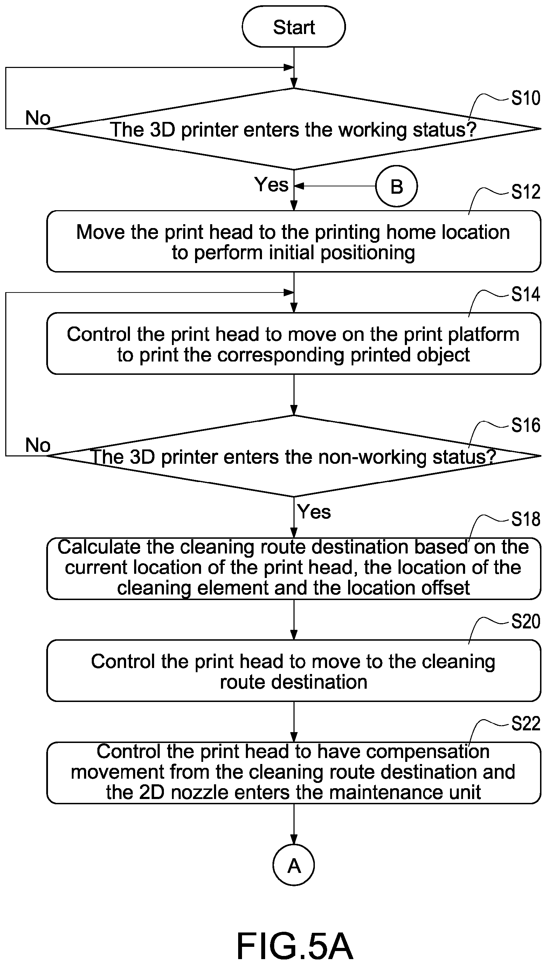

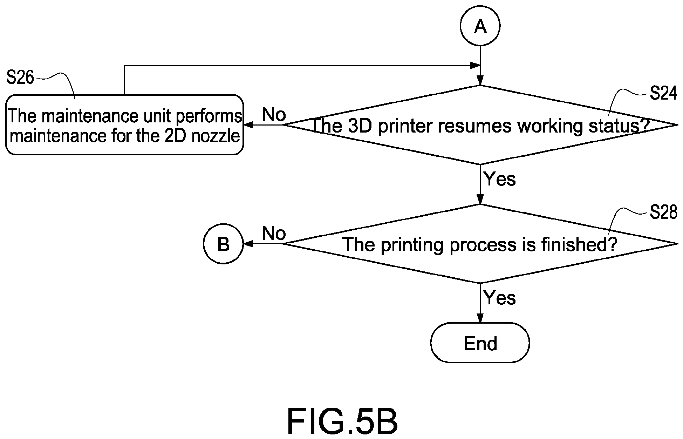

Refer to Figs. 5A and 5B, where Fig. 5A is a first flowchart according to a first embodiment of the present disclosure and Fig. 5B is a second flowchart according to the first embodiment of the present disclosure. Figs. 5A and 5B disclose the movement route control method (hereinafter the control method) for 3D printer according to the present disclosure and the control method can be applied to the 3D printer 1 shown in any drawing in Figs. 3, 4A-4C.

At first, the processor (not shown) of the 3D printer 1 determines whether the 3D printer 1 starts printing, namely, whether the 3D printer 1 enters the working status (step S10). The control method is back to the step S10 (for example, waiting in standby mode) if the 3D printer 1 does not enter the working status. The control method executes step S12 if the 3D printer 1 enters the working status.

After entering the working status, the 3D printer 1 controls the print head 12 to move on the print platform 11 according to the imported 3D file such that the 3D printer 1 prints the printed object corresponding to the 3D file on the print platform 11.

More particularly, after the 3D printer 1 enters the working status, the print head 12 may be at arbitrary location on the 3D printer 1. Before start printing, the 3D printer 1 first controls the print head 12 to move to the printing home location I0 to perform initial positioning for the print head 12 (step S12). In one embodiment, the 3D printer 1 controls the extrusion outlet 1211 of the 3D nozzle 121 on the print head 12 to align with the printing home location I0 and sets the coordinate of the extrusion outlet 1211 to be (0, 0), thus facilitate the calculation of location for the print head 12 during the movement of the print head 12.

As mentioned above, after the initial positioning, the print head 12 may use the same coordinate system with the printing home location I0 and the cleaning element 2. More particularly, the print head 12 may use the same coordinate system with the printing home location I0, the cleaning element 2 and the maintenance unit 21.

After the initial positioning, the 3D printer 1 again controls the print head 12 to move on the print platform to print the corresponding printed object (step S14).

Afterward, during printing, the processor continually determines whether the 3D printer 1 enters the non-working status (step S16). In one embodiment, the 3D printer 1 may determines whether it needs to enter the non-working status according to the printing time of the 3D nozzle 121, the extrusion amount of the forming material, the current printed layer number of the printed object, the sprayed ink amount of the 2D nozzle 122, the un-spraying time of the 2D nozzle 122. However, the above description is only exemplary and is not limitation for the present disclosure.

The 3D printer 1 returns to step S14 to continually control the print head 12 to perform printing in working status if the 3D printer 1 determines that the condition to enter the non-working status is not reached. The 3D printer 1 controls the print head 12 to stop printing (namely, controls the 3D nozzle 121 to stop extruding forming material and controls the 2D nozzle 122 to stop spraying ink) if the 3D printer 1 determines that the condition to enter the non-working status is reached. Afterward, the 3D printer 1 calculates the cleaning route destination based on the current location of the print head 12, the location of the cleaning element 2 and the location offset (step S18).

In the embodiment shown in Figs. 5A and 5B, the calculation of the location offset is the same as or similar to the description for Figs. 4A to 4C, the detailed description for the embodiment shown in Figs. 5A and 5B is not stated here for brevity.

It should be noted that the 3D printer 1 calculates the cleaning route destination based on the current location of the print head 12, the location of the printing home location I0, the location of the cleaning element 2 and the location offset in step S18 if the 3D printer 1 already moves the printer head 12 to the printing home location I0 for initial positioning (namely, the step S12 had been executed) before starting printing.

In this embodiment, in step S18 the 3D printer 1 mainly subtracts the transversal offset (such as the transversal offset m in Fig. 4C) from the distance (such as the distance u in Fig. 3) between the printing home location I0 and the cleaning element 2 along x-axis to obtain the x-axis destination (such as the destination 1001 at x-axis as shown in Fig. 6A). Afterward, the 3D printer 1 subtracts the longitudinal offset (such as the longitudinal offset n in Fig. 4C) from the distance (such as the distance v in Fig. 3) between the printing home location I0 and the cleaning element 2 along y-axis to obtain the y-axis destination (such as the y-axis destination 1002 as shown in Fig. 6A). Finally, the 3D printer 1 generates the cleaning route destination (such as the cleaning route destination 100 shown in Fig. 6A) based on the x-axis destination and the y-axis destination.

After step S18, the 3D printer 1 controls the print head 12 to move to the cleaning route destination (step S20). It should be noted that in step S20 the 3D printer 1 needs to control the print head 12 to move back to the printing home location I0 from current location and then move to the cleaning route destination from the printing home location I0 to eliminate the control error if the location of the printing home location I0 is not referenced to in step S18. On the contrary, the 3D printer 1 can directly control the print head 12 to move to the cleaning route destination directly from the current location in step S20 if the location of the printing home location I0 is referenced to in step S18.

After the print head 12 reaches the cleaning route destination, the 3D printer 1 controls the print head 12 to have compensation movement from the cleaning route destination based on the location offset (such as the such as the transversal offset m and the longitudinal offset n) such that the 2D nozzle 122 enters the maintenance unit 21 and the maintenance unit 21 performs maintenance for the 2D nozzle 122 (step S22). Moreover, in case that the cleaning element 2 and the maintenance unit 21 are integrated into a cleaning module 3, the 3D nozzle 121 can also enter the cleaning range of the cleaning element 2 in step S22 and the cleaning element 2 performs cleaning for the 3D nozzle 121.

In comparison with the 3D nozzle 121, the 2D nozzle 122 is closer to the cleaning element 2 along y-axis direction. The 3D printer 1 may first compensate the offset along y-axis and then compensate the offset along x-axis to further reduce the possibility of 2D nozzle 122 colliding with the cleaning element 2 during compensation movement.

Through the control method of the present disclosure, the 2D nozzle 122 can be ensured to be free from damaged on surface thereof caused by collision with the cleaning element 2 when the 3D printer 1 controls the 2D nozzle 122 to move to the maintenance unit 21 for obtaining maintenance there.

Afterward, as shown in Fig. 5B, the processor continually determines whether the 3D printer 1 resumes working status in step S24 when the 2D nozzle 122 is subject to maintenance. In other word, the processor continually determines whether the maintenance for the 2D nozzle 122 is finished. The 3D printer 1 controls the maintenance unit 21 to perform maintenance for the 2D nozzle in step S26 if the processor determines that the working status is not resumed. The processor further determines whether the printing process is finished in step S28 when the processor determines that the working status is to be resumed.

The 3D printer 1 is back to step S12 to control the print head 12 for initial positioning if the e printing process is not finished, and enters the working status to continue the printing process after initial positioning. The 3D printer 1 ends the control method if the printing process is finished.

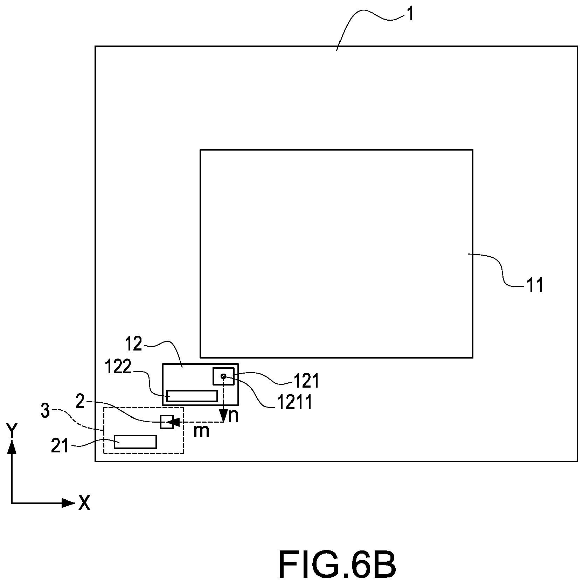

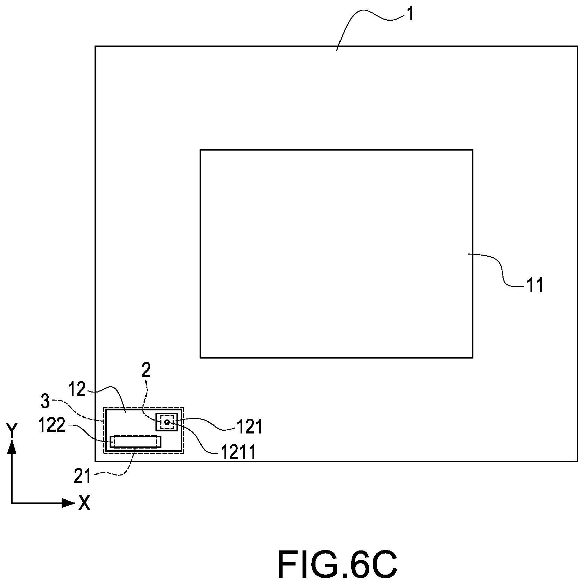

Refer to Figs. 6A, 6B and 6C, where Fig. 6A shows a first movement according to the first embodiment of the present disclosure, Fig. 6B shows a second movement according to the first embodiment of the present disclosure, and Fig. 6C shows a third movement according to the first embodiment of the present disclosure. Figs. 6A to 6C show the detail how the control method of Figs. 5A and 5B applies to the 3D printer 1.

As shown in Fig. 6A, the 3D printer 1 may calculate or record the coordinate (such as (0, 0)) of the printing home location I0, the coordinate (such as (u, v)) of the cleaning element 2, and the location offsets (such as the transversal offset m and the longitudinal offset n) of the 2D nozzle 122 with respect to the 3D nozzle 121.

Through above data, the 3D printer 1 may subtract the transversal offset m of the 2D nozzle 122 from the distance u between the printing home location I0 and the cleaning element 2 along x-axis to obtain the coordinate (such as (u-m,0)) of the x-axis destination 1001, and subtract the longitudinal offset n of the 2D nozzle 122 from the distance v between the printing home location I0 and the cleaning element 2 along y-axis to obtain the coordinate (such as (0, v-n)) of the y-axis destination 1002. Finally, the 3D printer 1 generates the cleaning route destination 100 based on the x-axis destination 1001 and the y-axis destination 1002, namely, the coordinate of the cleaning route destination 100 is (u-m, v-n).

It should be noted that the location offset between the 2D nozzle 122 and the 3D nozzle 121 has been considered during the calculation of the cleaning route destination 100; the 2D nozzle 122 will never collide with the cleaning element 2 when the 3D printer 1 controls the print head 12 to move to the cleaning route destination 100.

More particularly, in case that the 3D printer 1 plans, based on the x-axis destination 1001 and the y-axis destination 1002, one or more cleaning route through which the print head 12 is controlled to move to the cleaning route destination 100; the 2D nozzle 122 will never collide with the cleaning element 2 no matter through which cleaning route the print head 12 is moved. In other word, as long as the cleaning route planned by the 3D printer 1 has a maximal movement along x-axis not beyond the x-axis destination 1001 and a maximal movement along y-coordinate not beyond the y-axis destination 1002, the 3D printer 1 may control the print head 12 to move to the cleaning route destination 100 through arbitrary cleaning route.

In the embodiment shown in Fig. 6A, the print head 12 is moved from the printing home location I0 to the cleaning route destination 100. If the print head 12 is at arbitrary location (for example, the coordinate is (x,y)) when the 3D printer 1 enters the non-working status, then the 3D printer 1 may calculate the location of the cleaning route destination 100 based on the distance (u, v) between the printing home location I0 and the cleaning element 2, the distance (x, y) between the print head 12 and the printing home location I0, and the location offsets (m, n) of the 2D nozzle 122. Therefore, the print head 12 does not need to return to the printing home location I0, thus enhance cleaning efficiency.

With reference to Fig. 6B, when the print head 12 is moved to the cleaning route destination 100, the distance between the 2D nozzle 122 and the maintenance unit 21 is roughly equal to the transversal offset m and the longitudinal offset n of the 2D nozzle 122 with respect to the 3D nozzle 121. At this time, the 3D printer 1 may control the print head 12 to have compensation movement from the cleaning route destination 100 (such as moving distance m along x-axis and moving distance n along y-axis) such that the 2D nozzle 122 can enter the maintenance unit 21 as shown in Fig. 6C. Therefore, the 3D printer 1 can move the 2D nozzle 122 to the maintenance unit 21 for obtaining maintenance there without damaging the 2D nozzle 122.

In the embodiment shown in Fig. 4C, the 3D nozzle 121 is arranged at right-rear side of the 2D nozzle 122 (viewed from top). The transversal offset m of the 2D nozzle 122 with respect to the 3D nozzle 121 is positive and the longitudinal offset n is also positive. However, the different 3D printer may have print head of different configuration or arrangement, the above mentioned transversal offset and longitudinal offset may be negative value. In case that the cleaning element 2 and the maintenance unit 21 are integrated into a cleaning module 3, the relative location and relative distance between the cleaning element 2 and the maintenance unit 21 are correspondingly changed with the configuration or arrangement of the print head.

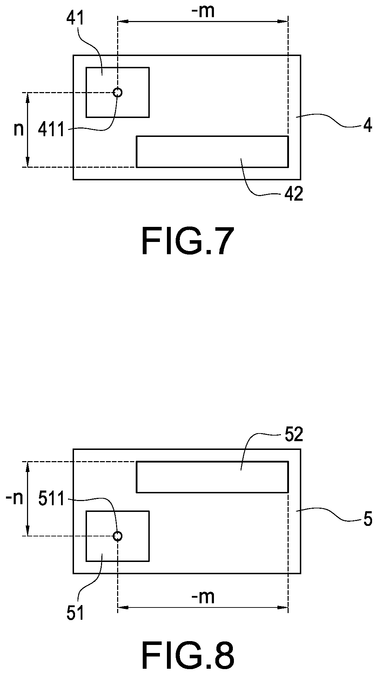

Fig. 7 shows the top view of the print head according to the second embodiment of the present disclosure. In this embodiment, the print head 4 includes a 3D nozzle 41 and a 2D nozzle 42. The 3D nozzle 41 is arranged at left-rear side of the 2D nozzle 42 (viewed from top). The transversal offset of the 2D nozzle 122 with respect to the 3D nozzle 121 is negative (namely -m) and the longitudinal offset is positive (namely +n). In this embodiment, for calculating the cleaning route destination, the 3D printer 1 subtracts the transversal offset (-m) from the distance (u) between the printing home location I0 and the cleaning element 2 along x-axis (namely, u-(-m)) to obtain the x-axis destination 1001, and subtracts the longitudinal offset (n) from the distance (v) between the printing home location I0 and the cleaning element 2 along y-axis (namely, v-n) to obtain the y-axis destination 1002. Therefore, the 3D printer 1 generates the cleaning route destination 100 based on the x-axis destination 1001 and the y-axis destination 1002, where the location offset is the offset between farthest ink outlet (having the largest distance with the3D nozzle 41 in comparison with other ink outlets) of the 2D nozzle 41 and the extrusion outlet 411 of the 3D nozzle 41.

Fig. 8 shows the top view of the print head according to the third embodiment of the present disclosure. In this embodiment, the print head 5 includes a 3D nozzle 51 and a 2D nozzle 52. The 3D nozzle 51 is arranged at left-front side of the 2D nozzle 52 (viewed from top). The transversal offset of the 2D nozzle 122 with respect to the 3D nozzle 121 is negative (namely -m) and the longitudinal offset is also negative (namely -n). In this embodiment, for calculating the cleaning route destination, the 3D printer 1 subtracts the transversal offset (-m) from the distance (u) between the printing home location I0 and the cleaning element 2 along x-axis (namely, u-(-m)) to obtain the x-axis destination 1001, and subtracts the longitudinal offset (-n) from the distance (v) between the printing home location I0 and the cleaning element 2 along y-axis (namely, v-(-n)) to obtain the y-axis destination 1002. Therefore, the 3D printer 1 generates the cleaning route destination 100 based on the x-axis destination 1001 and the y-axis destination 1002, where the location offset is the offset between farthest ink outlet (having the largest distance with the3D nozzle 41 in comparison with other ink outlets) of the 2D nozzle 51 and the extrusion outlet 511 of the 3D nozzle 51.

Through above calculation, the 2D nozzle will never collide with the cleaning element 2 when the 2D nozzle is moved to the maintenance unit 21, no matter how the 2D nozzle and the 3D nozzle are arranged in single print head.

In above embodiments, the printing home location I0 is exemplified to arrange at the right-top corner while the cleaning element 2 and the maintenance unit 21 are exemplified to arrange at the left-bottom corner. However, in the present disclosure, the printing home location I0 may be arranged at arbitrary location on the 3D printer 1, while the cleaning element 2 and the maintenance unit 21 may also be arranged at arbitrary location on the 3D printer 1.

As shown in Fig. 3, when the printing home location I0 is arranged at the right-top corner and the cleaning element 2 and the maintenance unit 21 are arranged at the left-bottom corner, the distance u between the printing home location I0 and the cleaning element 2 along x-axis is positive, while the distance v between the printing home location I0 and the cleaning element 2 along y-axis is also positive. In another embodiment, if the printing home location I0 is arranged at the left-top corner and the cleaning element 2 and the maintenance unit 21 are arranged at the right-bottom corner, the distance u between the printing home location I0 and the cleaning element 2 along x-axis is negative (namely, -u), while the distance v between the printing home location I0 and the cleaning element 2 along y-axis is still positive.

In still another embodiment, if the printing home location I0 is arranged at the left-bottom corner and the cleaning element 2 and the maintenance unit 21 are arranged at the right-top corner, the distance u between the printing home location I0 and the cleaning element 2 along x-axis is negative (namely, -u), while the distance v between the printing home location I0 and the cleaning element 2 along y-axis is also negative (namely, -v). However, the above description is only exemplary and is not limitation for the present disclosure.

By above definition for distance, the 3D printer 1 can calculate the cleaning route destination 100 and one or more cleaning route based on the current location of the print head 12, the location of the printing home location I0, the location of the cleaning element 2 and the location offset of the 2D nozzle 122, whereby the 2D nozzle will never collide with the cleaning element 2 no matter how the print head is moved.

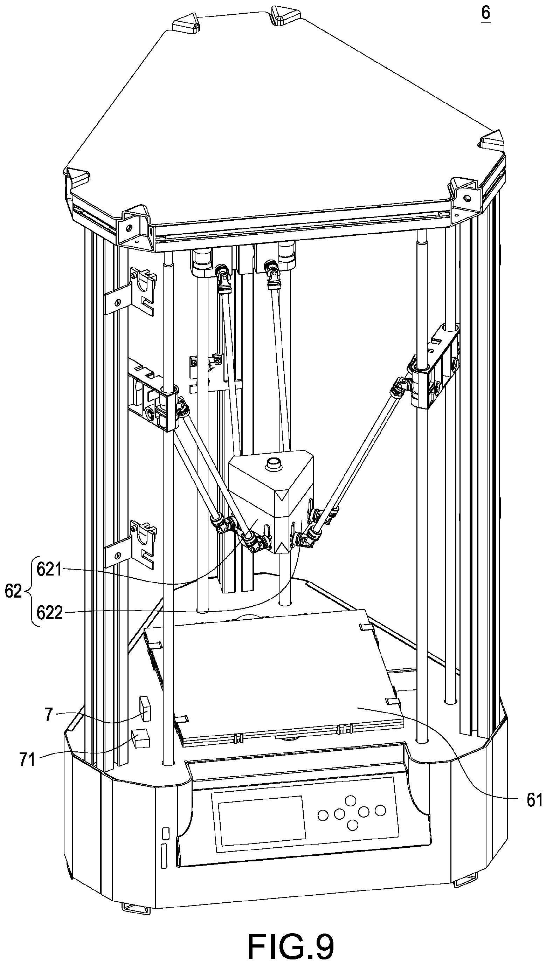

Fig. 9 shows the schematic view of the 3D printer according to the third embodiment of the present disclosure and discloses another 3D printer 6. The 3D printer 6 has a print platform 61, a print head 62, a cleaning element 7 and a maintenance unit 71 same as or similar to the counter parts of the 3D printer 1 mentioned before. The print head 62 comprises a 3D nozzle 621 and a 2D nozzle 622, while the 3D nozzle 621 and the 2D nozzle 622 are respectively same as or similar to the above-mentioned 3D nozzle 121 and 2D nozzle 122.

The above-mentioned 3D printer 1 is exemplified with Fused Deposition Modeling (FDM) printer and the 3D printer 6 shown in Fig. 9 is Delta-structure 3D printer. In this embodiment, the 3D printer 6 has a print head 62 comprising 3D nozzle 621 and 2D nozzle 622 and the 3D printer 6 has a built-in cleaning element 7 for cleaning the 3D nozzle 621 and a built-in maintenance unit 71 for maintaining the 2D nozzle 622. Therefore, the 2D nozzle 622 of the 3D printer 6 may have the risk of damage caused by collision with the cleaning element 7.

In other word, the 3D printer according to the present disclosure can be 3D printer of various types, and the control method according to the present disclosure can solve the problem of 2D nozzle damage caused by the cleaning operation of the 3D nozzle in the 3D printer.

## Claims

1. A 3D printer (1) comprising:
a print platform (11) configured to support a printed object;
a print head (12) comprising a 2D nozzle (122) and a 3D nozzle (121), the 2D nozzle (122) having a location offset with respect to the 3D nozzle (121);
a cleaning element (2) configured to clean the 3D nozzle (121); and
a maintenance unit (21) configured to maintain the 2D nozzle (122);
wherein the 3D printer (1) is configured to control the print head (12) to move on the print platform (11) and to print the printed object when the 3D printer (1) enters a working status;
wherein the 3D printer (1) is configured to calculate a cleaning route destination (100) based on to a current location of the print head (12), a location of the cleaning element (2), and the location offset when the 3D printer (1) enters a non-working status, the 3D printer (1) is configured to control the print head (12) to move to the cleaning route destination (100) and move the print head (12) by a compensation movement from the cleaning route destination (100) such that the 2D nozzle (122) is moved into the maintenance unit (21) for maintenance there.

2. The 3D printer in claim 1, wherein the cleaning element (2) and the maintenance unit (21) are arranged in a cleaning module (3), a relative location and a relative distance between the cleaning element (2) and the maintenance unit (21) on the cleaning module (3) are respectively equal to a relative location and a relative distance between the 3D nozzle (121) and the 2D nozzle (122) on the print head (12).

3. The 3D printer in claim 1, wherein the 3D printer (1) is defined with a printing home location (10) therein, the 3D printer (1) is configured to move the print head (12) to the printing home location (10) for initial positioning when the 3D printer (1) enters the working status, wherein the 3D printer (1) is configured to calculate the cleaning route destination (100) based on the current location of the print head (12), the printing home location (10), the location of the cleaning element (2), and the location offset when the 3D printer (1) enters the non-working status.

4. The 3D printer in claim 3, wherein the location offset is a distance between a farthest ink outlet of the 2D nozzle and an extrusion outlet (1211) of the 3D nozzle (121), the 3D printer (1) is configured to finish the initial positioning for the print head (12) when the extrusion outlet (1211) is moved to the printing home location (10).

5. The 3D printer in claim 3, wherein the location offset comprises a transversal offset (m) with respect to an x-axis of the print platform (11) and a longitudinal offset (n) with respect to a y-axis of the print platform (11).

6. The 3D printer in claim 5, wherein the 3D printer (1) is configured to subtract the transversal offset (m) from a distance (u) between the printing home location (10) and the cleaning element (2) along the x-axis to obtain an x-axis destination (1001) and to subtract the longitudinal offset (n) from a distance (v) between the printing home location (10) and the cleaning element (2) along the y-axis to obtain a y-axis destination (1002), the 3D printer (1) is configured to generate the cleaning route destination (100) based on the x-axis destination (1001) and the y-axis destination (1002).

7. The 3D printer in claim 6, wherein the 3D printer (1) is configured to control the print head (12) to move to the cleaning route destination (100) based on a cleaning route in the working status, wherein a maximal movement coordinate of the cleaning route along the x-axis is not beyond the x-axis destination (1001) and a maximal movement coordinate of the cleaning route along the y-axis is not beyond the y-axis destination (1002).

8. A method for controlling movement route of a 3D printer, the method applied to a 3D printer (1) having a print platform (11), a print head (12) including a 2D nozzle (121) and a 3D nozzle (122), a maintenance unit (21) for the 2D nozzle (122) and a cleaning element (2) for the 3D nozzle (121), the 2D nozzle (122) having a location offset with respect to the 3D nozzle (121), the method comprising:
a) controlling the print head (12) to move on the print platform (11) to print a printed object under a working status;
b) calculating a cleaning route destination (100) based on a current location of the print head (12), a location of the cleaning element (2), and the location offset under a non-working status;
c) controlling the print head (12) to move to the cleaning route destination (100); and
d) controlling the print head (12) to perform a compensation movement from the cleaning route destination (100) such that the 2D nozzle (122) is moved into the maintenance unit (21) for maintenance there.

9. The method in claim 8, wherein the cleaning element (2) and the maintenance unit (21) are arranged in a cleaning module (3), a relative location and a relative distance between the cleaning element (2) and the maintenance unit (21) on the cleaning module (3) are respectively equal to a relative location and a relative distance between the 3D nozzle (121) and the 2D nozzle (122) on the print head (12).

10. The method in claim 8, wherein the 3D printer (1) is defined with a printing home location (10) therein, and the step a) further comprises:
a1) moving the print head (12) to the printing home location (10) for initial positioning when the 3D printer (1) enters the working status,
a2) after initial positioning, controlling the print head (12) to move on the print platform (11) to print a printed object;
wherein in step b) the cleaning route destination (100) is calculated based on to the current location of the print head (12), a location of the printing home location (10), the location of the cleaning element (2), and the location offset when the 3D printer (1) enters the non-working status.

11. The method in claim 10, wherein the location offset is a distance between a farthest ink outlet of the 2D nozzle and an extrusion outlet (1211) of the 3D nozzle (121), wherein in step a1) the initial positioning for the print head (12) is finished when the extrusion outlet (1211) is moved to the printing home location (10).

12. The method in claim 10, wherein the location offset comprises a transversal offset (m) with respect to an x-axis of the print platform (11) and a longitudinal offset (n) with respect to a y-axis of the print platform (11).

13. The method in claim 12, wherein in step b) the transversal offset (m) is subtracted from a distance (u) between the printing home location (10) and the cleaning element (2) along the x-axis to obtain an x-axis destination (1001) and the longitudinal offset (n) is subtracted from a distance (v) between the printing home location (10) and the cleaning element (2) along the y-axis to obtain a y-axis destination (1002), the cleaning route destination (100) is generated based on the x-axis destination (1001) and the y-axis destination (1002).

14. The method in claim 13, wherein in step c) the print head (12) is controlled to move to the cleaning route destination (100) based on a cleaning route in the working status, wherein a maximal movement coordinate of the cleaning route along the x-axis is not beyond the x-axis destination (1001) and a maximal movement coordinate of the cleaning route along the y-axis is not beyond the y-axis destination (1002).

15. The method in claim 8, further comprising:
e) determining whether the 3D printer (1) resumes working status;
f) continually using the maintenance unit (21) to perform maintenance for the 2D nozzle (122) before the 3D printer (1) resumes working status; and
g) returning to step a) after the 3D printer (1) resumes working status.
